# FASCICULE DE BREVET EUROPEEN

(11) **EP 1 045 325 B1**
(45) Date de publication et mention de la délivrance du brevet: **29.11.2006**
(21) Numéro de dépôt: 00410032.7
(22) Date de dépôt: 06.04.2000
(51) Int. Cl.: G06K 7/00, G06K 19/07

(54) **Détection de distance entre un transpondeur électromagnetique et une borne**
Entfernungsbestimmung zwischen einem elektromagnetischen Transponder und einem Terminal
Detection of distance between an electromagnetic transponder and a terminal

(30) Priorité: 07.04.1999 FR 9904546
(43) Date de publication de la demande: 18.10.2000
(73) Titulaire: STMicroelectronics S.A., 92120 Montrouge (FR)
(72) Inventeur: Wuidart, Luc, 83910 Pourrieres (FR)
(74) Mandataire: de Beaumont, Michel

(56) Documents cités:
- EP-A- 0 667 537
- EP-A- 0 722 094
- FR-A- 2 746 200

## Description

La présente invention concerne des systèmes utilisant des transpondeurs électromagnétiques, c'est-à-dire des émetteurs-récepteurs (généralement mobiles) susceptibles d'être interrogés, sans contact et sans fil, par une unité (généralement fixe), dite borne de lecture et/ou d'écriture. L'invention concerne, plus particulièrement, des transpondeurs dépourvus d'alimentation autonome. Ces transpondeurs extraient l'alimentation nécessaire aux circuits électroniques qu'ils comportent du champ haute fréquence rayonné par une antenne de la borne de lecture et d'écriture. L'invention s'applique à de tels transpondeurs, qu'il s'agisse de transpondeurs à lecture seule, c'est-à-dire propres à fonctionner avec une borne se contentant de lire les données du transpondeur, ou à des transpondeurs à lecture-écriture qui contiennent des données qui peuvent être modifiées par la borne.

La présente invention concerne, plus particulièrement la détection, par un transpondeur, de la distance qui le sépare d'une borne et, plus particulièrement, de la position du transpondeur par rapport à un seuil de distance de la borne conditionnant le fonctionnement du système.

Les transpondeurs électromagnétiques sont basés sur l'emploi de circuits oscillants comprenant un enroulement formant antenne, côté transpondeur et côté borne de lecture-écriture. Ces circuits sont destinés à être couplés par champ magnétique proche lorsque le transpondeur entre dans le champ de la borne de lecture-écriture. La portée d'un système à transpondeur, c'est-à-dire la distance maximale de la borne à laquelle un transpondeur est activé (réveillé) dépend, notamment, de la taille de l'antenne du transpondeur, de la fréquence d'excitation de la bobine du circuit oscillant engendrant le champ magnétique, de l'intensité de cette excitation, et de la consommation en puissance du transpondeur.

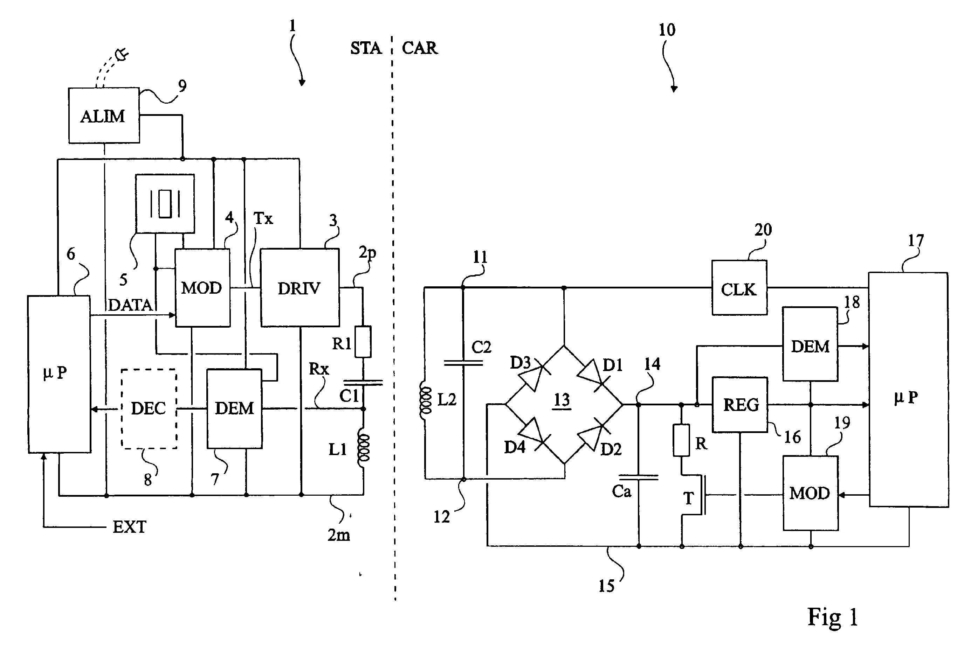

La figure 1 représente, de façon très schématique et fonctionnelle, un exemple classique de système d'échange de données entre une borne 1 de lecture-écriture (STA) et un transpondeur 10 (CAR).

Généralement, la borne 1 est essentiellement constituée d'un circuit oscillant formé d'une inductance L1, en série avec un condensateur C1 et une résistance R1, entre une borne 2p de sortie d'un amplificateur ou coupleur d'antenne 3 (DRIV) et une borne 2m à un potentiel de référence (généralement, la masse). L'amplificateur 3 reçoit un signal Tx de transmission haute fréquence, issu d'un modulateur 4 (MOD). Le modulateur reçoit une fréquence de référence, par exemple d'un oscillateur à quartz 5 et, si besoin, un signal DATA de données à transmettre. En l'absence de transmission de données de la borne 1 vers le transpondeur 10, le signal Tx sert uniquement de source d'énergie pour activer le transpondeur si celui-ci passe dans le champ. Les données à transmettre proviennent généralement d'un système numérique, par exemple, un microprocesseur 6 (µP).

Le point de connexion du condensateur C1 et de l'inductance L1 constitue, dans l'exemple représenté à la figure 1, une borne de prélèvement d'un signal Rx de données, reçues d'un transpondeur 10 à destination d'un démodulateur 7 (DEM). Une sortie du démodulateur communique (le cas échéant par l'intermédiaire d'un décodeur (DEC) 8) les données reçues du transpondeur 10 au microprocesseur 6 de la borne de lecture-écriture 1. Le démodulateur 7 reçoit, généralement de l'oscillateur 5, un signal d'horloge ou de référence pour une démodulation de phase. Le cas échéant, la démodulation est effectuée à partir d'un signal prélevé entre le condensateur C1 et la résistance R1, et non aux bornes de l'inductance L1. Le microprocesseur 6 communique (bus EXT) avec différents circuits d'entrée/sortie (clavier, écran, moyen de transmission vers un serveur, etc.) et/ou de traitement. Les circuits de la borne de lecture-écriture tirent l'énergie nécessaire à leur fonctionnement d'un circuit d'alimentation 9 (ALIM) raccordé, par exemple, au réseau de distribution électrique.

Côté transpondeur 10, une inductance L2, en parallèle avec un condensateur C2, forme un circuit oscillant parallèle (appelé circuit résonant en réception), destiné à capter le champ magnétique engendré par le circuit oscillant série L1C1 de la borne 1. Le circuit résonant (L2, C2) du transpondeur 10 est accordé sur la fréquence de résonance du circuit oscillant (L1, C1) de la borne 1.

Les bornes 11, 12 du circuit résonant L2C2 qui correspondent aux bornes du condensateur C2, sont reliées à deux bornes d'entrée alternative d'un pont redresseur 13 constitué, par exemple, de quatre diodes D1, D2, D3, D4. Dans la représentation de la figure 1, l'anode de la diode D1 est connectée à la borne 11, de même que la cathode de la diode D3. L'anode de la diode D2 et la cathode de la diode D4 sont connectées à la borne 12. Les cathodes des diodes D1 et D2 constituent une borne positive 14 de sortie redressée. Les anodes des diodes D3 et D4 constituent une borne de référence 15 de la tension redressée. Un condensateur Ca est connecté aux bornes de sortie redressée 14, 15 du pont 13 de façon à stocker de l'énergie et à lisser la tension redressée délivrée par le pont. On notera que le pont de diodes peut être remplacé par un montage de redressement monoalternance.

Quand le transpondeur 10 se trouve dans le champ de la borne 1, une tension haute fréquence est engendrée aux bornes du circuit résonant L2C2. Cette tension, redressée par le pont 13 et lissée par le condensateur Ca, fournit une tension d'alimentation à des circuits électroniques du transpondeur par l'intermédiaire d'un régulateur de tension 16 (REG). Ces circuits comprennent généralement, essentiellement, un microprocesseur (µP) 17 (associé à une mémoire non représentée), un démodulateur 18 (DEM) des signaux éventuellement reçus de la borne 1, et un modulateur 19 (MOD) pour transmettre des informations à la borne 1. Le transpondeur est généralement synchronisé au moyen d'une horloge (CLK) extraite, par un bloc 20, du signal haute fréquence récupéré aux bornes du condensateur C2, avant redressement. Le plus souvent, tous les circuits électroniques du transpondeur 10 sont intégrés dans une même puce.

Pour transmettre des données du transpondeur 10 vers la borne 1, le modulateur 19 commande un étage de modulation (rétromodulation) du circuit résonant L2C2. Cet étage de modulation est généralement constitué d'un interrupteur électronique (par exemple, un transistor T) et d'une résistance R, en série entre les bornes 14 et 15. Le transistor T est commandé à une fréquence (par exemple, 847,5 kHz) dite sous-porteuse, nettement inférieure (généralement avec un rapport d'au moins 10) à la fréquence du signal d'excitation du circuit oscillant de la borne 1 (par exemple, 13,56 MHz). Lorsque l'interrupteur T est fermé, le circuit oscillant du transpondeur est soumis à un amortissement supplémentaire par rapport à la charge constituée des circuits 16, 17, 18, 19 et 20, de sorte que le transpondeur prélève une quantité d'énergie plus importante du champ magnétique haute fréquence. Côté borne 1, l'amplificateur 3 maintient constante l'amplitude du signal d'excitation à haute fréquence. Par conséquent, la variation d'énergie du transpondeur se traduit par une variation d'amplitude et de phase du courant dans l'antenne L1. Cette variation est détectée par le démodulateur 7 de la borne 1 qui est soit un démodulateur de phase, soit un démodulateur d'amplitude. Par exemple, dans le cas d'une démodulation de phase, le démodulateur détecte, dans les demi-périodes de la sous-porteuse où l'interrupteur T du transpondeur est fermé, un léger déphasage (quelques degrés, voire moins d'un degré) de la porteuse du signal Rx par rapport au signal de référence. La sortie du démodulateur 7 (généralement la sortie d'un filtre passe-bande centré sur la fréquence de la sous-porteuse) restitue alors un signal image du signal de commande de l'interrupteur T qui peut être décodé (par le décodeur 8 ou directement par le microprocesseur 6) pour restituer les données binaires.

On notera que la borne ne transmet pas de données pendant qu'elle en reçoit d'un transpondeur, la transmission de données s'effectuant alternativement dans un sens puis dans l'autre (semi-duplex).

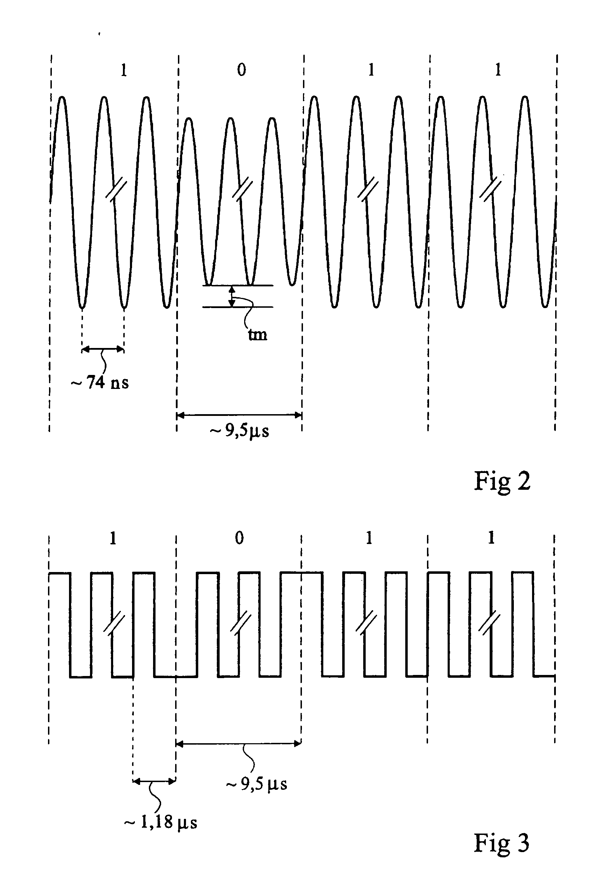

La figure 2 illustre un exemple classique de transmission de données de la borne 1 vers un transpondeur 10. Cette figure représente un exemple d'allure du signal d'excitation de l'antenne L1 pour une transmission d'un code 1011. La modulation couramment utilisée est une modulation d'amplitude avec un débit de 106 kbit/s (un bit est transmis en environ 9,5 µs) nettement inférieur à la fréquence (par exemple, 13,56 MHz) de la porteuse provenant de l'oscillateur 5 (période d'environ 74 ns). La modulation d'amplitude s'effectue, soit en tout ou rien, soit avec un taux de modulation (défini comme étant la différence des amplitudes crêtes entre les deux états (0 et 1), divisée par la somme de ces amplitudes) inférieur à l'unité en raison du besoin d'alimentation du transpondeur 10. Dans l'exemple de la figure 2, la porteuse à 13,56 MHz est modulée, avec un débit de 106 kbit/s, en amplitude avec un taux de modulation tm de 10%.

La figure 3 illustre un exemple classique de transmission de données du transpondeur 10 vers la borne 1. Cette figure illustre un exemple d'allure du signal de commande du transistor T, fourni par le modulateur 19, pour une transmission d'un code 1011. Côté transpondeur, la rétromodulation est généralement de type résistif avec une porteuse (dite sous-porteuse) de, par exemple, 847,5 kHz (période d'environ 1,18 µs). La rétromodulation est, par exemple, basée sur un codage de type BPSK (codage binaire par saut de phase) à un débit de l'ordre de 106 kbit/s nettement inférieur à la fréquence de la sous-porteuse.

On notera que, quel que soit le type de modulation ou de rétromodulation utilisé (par exemple, d'amplitude, de phase, de fréquence) et quel que soit le type de codage des données (NRZ, NRZI, Manchester, ASK, BPSK, etc.), celle-ci s'effectue de façon numérique, par saut entre deux niveaux binaires.

Les circuits oscillants de la borne et du transpondeur sont généralement accordés sur la fréquence de la porteuse, c'est-à-dire que leur fréquence de résonance est réglée sur la fréquence de 13,56 MHz. Cet accord a pour objet de maximiser la diffusion d'énergie vers le transpondeur, généralement, une carte de format type carte de crédit intégrant les différents constituants du transpondeur.

Dans certaines applications, on peut souhaiter connaître la distance qui sépare le transpondeur d'une borne, ou la position du transpondeur par rapport à un seuil de distance. Une telle détection de distance peut servir, par exemple, à basculer le système dans un mode de fonctionnement ou un autre selon que le transpondeur est proche (de l'ordre de 2 à 10 cm) ou très proche (moins d'environ 2 cm) du lecteur. La notion de proximité concerne la distance séparant les antennes L1 et L2 l'une de l'autre.

On connaît du document WO-A-97/34250 un dispositif d'échange d'informations sans contact avec une étiquette électronique, ce dispositif comportant des moyens de pré-traitement d'un signal représentatif de la distance entre l'étiquette et le dispositif, à partir du signal émis par l'étiquette. Ces moyens servent à déterminer et à signaler, au dispositif d'échange d'informations, que l'information provenant de l'étiquette est comprise dans une fenêtre de valeur prédéterminée. Le dispositif décrit par ce document fait appel à une mesure de l'amplitude d'une modulation basse fréquence apportée par l'étiquette en réponse à une commande de lecture faite par le dispositif. Selon ce document, l'amplitude de cette modulation est représentative de la distance séparant l'étiquette et le dispositif d'échange d'informations.

Outre le fait que la détection de distance par ce document s'effectue côté borne, cette détection nécessite une démodulation du signal rétromodulé émis par le transpondeur ainsi qu'un pré-traitement du signal démodulé pour en extraire l'information de distance.

La présente invention vise à proposer une nouvelle solution de mesure de distance entre un transpondeur et un lecteur. En particulier, l'invention vise à proposer une solution qui soit mise en oeuvre côté transpondeur et non côté borne de lecture-écriture.

L'invention vise également à proposer une solution qui permette facilement une détection de la position d'un transpondeur par rapport à un seuil de distance le séparant de la borne.

L'invention vise également à ce que ce seuil de distance soit auto-adaptatif en fonction de l'environnement du système.

Pour atteindre ces objets, la présente invention prévoit un procédé de détermination de la distance séparant un transpondeur électromagnétique d'une borne produisant un champ magnétique au moyen d'un premier circuit oscillant, le transpondeur comprenant un deuxième circuit oscillant, en amont d'un moyen de redressement propre à fournir une tension continue, ce procédé consistant à :
mémoriser une première information relative au niveau de ladite tension continue quand le deuxième circuit oscillant est accordé sur une fréquence déterminée ;
mémoriser une deuxième information relative au niveau de ladite tension continue après avoir provoqué un désaccord en fréquence du deuxième circuit oscillant ; et
comparer les deux informations mémorisées.

Selon un mode de mise en oeuvre de la présente invention, on effectue périodiquement lesdites mesures et on compare l'évolution des informations mémorisées pour deux mesures successives dans les mêmes conditions d'accord.

Selon un mode de mise en oeuvre de la présente invention, lesdites informations représentent les valeurs respectives de la tension continue.

Selon un mode de mise en oeuvre de la présente invention, ladite comparaison entre les première et deuxième informations sert à déterminer la position du transpondeur par rapport à une position de couplage critique des circuits oscillants respectifs du transpondeur et de la borne.

Selon un mode de mise en oeuvre de la présente invention, ladite fréquence déterminée correspond à la fréquence d'excitation du circuit oscillant de la borne pour la téléalimentation du transpondeur.

Selon un mode de mise en oeuvre de la présente invention, le procédé est appliqué à déterminer le mode de fonctionnement du transpondeur parmi deux modes correspondant respectivement à une position en couplage serré ou en couplage lâche.

La présente invention concerne également un transpondeur électromagnétique comportant au moins une capacité commutée pour mettre en oeuvre le procédé de l'invention. ,

Selon un mode de réalisation de la présente invention, le transpondeur comporte un condensateur, en parallèle avec un élément inductif du deuxième circuit oscillant, et en série avec un moyen de commutation, ledit moyen de redressement étant constitué d'un élément à conduction unidirectionnelle.

Selon un mode de réalisation de la présente invention, le transpondeur comporte deux condensateurs, respectivement associés à chaque borne d'extrémité d'un élément inductif du deuxième circuit oscillant, chaque condensateur étant associé en série à un moyen de commutation dont une borne de référence est connectée à un potentiel de référence d'alimentation du circuit électronique, en aval du moyen de redressement.

Selon un mode de réalisation de la présente invention, le transpondeur comporte en outre deux moyens résistifs de modulation, en parallèle sur un condensateur de lissage de la tension redressée délivrée par ledit moyen de redressement.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
les figures 1 à 3 décrites précédemment sont destinées à exposer l'état de la technique et le problème posé ;
la figure 4 représente un premier mode de réalisation d'un transpondeur électromagnétique selon la présente invention ;
la figure 5 représente un deuxième mode de réalisation d'un transpondeur électromagnétique selon la présente invention ; et
la figure 6 représente un troisième mode de réalisation d'un transpondeur électromagnétique selon la présente invention.

Les mêmes éléments ont été désignés par les mêmes références aux différentes figures, et les figures ont été tracées sans respect d'échelle. Pour des raisons de clarté, seuls les éléments qui sont nécessaires à la compréhension de l'invention ont été représentés aux figures et seront décrits par la suite.

Une caractéristique de la présente invention est, pour effectuer une détermination de distance séparant un transpondeur d'une borne de lecture-écriture, de tester le comportement du transpondeur selon que son circuit oscillant est ou non accordé sur la fréquence de la porteuse de la téléalimentation du système. Ainsi, une caractéristique du procédé de détermination de distance selon la présente invention est de comparer les évolutions respectives du signal reçu par l'antenne du transpondeur selon que le circuit oscillant de ce dernier est ou non accordé sur la fréquence de téléalimentation. De préférence, cette détection est effectuée en surveillant la tension de téléalimentation récupérée par le transpondeur, en aval des moyens de redressement propres à fournir une tension continue d'alimentation de la partie numérique du transpondeur. Ainsi, selon un mode de mise en oeuvre préféré de la présente invention, on surveille la tension récupérée aux bornes du condensateur (par exemple Ca, figure 1) de lissage de la tension redressée.

Toujours selon un mode de mise en oeuvre préféré, la surveillance de la tension récupérée en sortie du moyen de redressement n'est pas effectuée par rapport à un seuil, mais on compare les valeurs de tension obtenues selon que le circuit oscillant est ou non accordé sur la fréquence de la porteuse. Cela revient à détecter la position du transpondeur par rapport à une position de couplage critique.

La position de couplage critique correspond à la distance à laquelle le couplage entre le transpondeur et la borne est optimisé par une amplitude de téléalimentation maximale reçue par le transpondeur lorsque les circuits oscillants de la borne et du transpondeur sont tous deux accordés sur la fréquence de la porteuse de téléalimentation. En d'autres termes, la position de couplage critique correspond à la distance où l'énergie de téléalimentation est maximale pour un facteur de couplage minimal, le facteur de couplage étant le rapport de la mutuelle inductance sur la racine carré du produit des inductances des circuits oscillants.

Selon ce mode de réalisation, on peut considérer que l'invention compare, selon que le circuit oscillant est ou non accordé, le niveau de la tension d'alimentation des circuits numériques du transpondeur par rapport à un seuil relatif.

On notera cependant que l'invention peut également permettre de déterminer la distance qui sépare le transpondeur d'une borne, par exemple, en comparant les niveaux de tension par rapport à une table de correspondances mémorisée.

La mise en oeuvre du procédé de détermination de distance de l'invention peut avantageusement être effectuée au cours d'une communication, avant chaque transmission d'information du transpondeur vers la borne. La durée nécessaire à l'exécution d'une détermination de distance selon l'invention est parfaitement compatible avec le temps de présence (de plusieurs centaines de millisecondes) d'un transpondeur dans le champ du lecteur.

Pour réaliser l'accord ou le désaccord du circuit oscillant du transpondeur de façon commandable, on effectue, de préférence, une modification de la capacité de ce circuit oscillant de façon à changer sa fréquence de résonance, donc le désaccorder de la fréquence de la porteuse de téléalimentation.

Une première solution consiste à connecter, en parallèle avec l'antenne du transpondeur, deux condensateurs dont l'un est associé en série avec un interrupteur de façon à le rendre commandable. Cette solution consiste à utiliser, à d'autres fins, un montage du type de celui décrit dans le document WO-A-98/29760 qui prévoit un désaccord en fréquence d'un transpondeur au moyen d'une capacité modifiable dans le circuit oscillant.

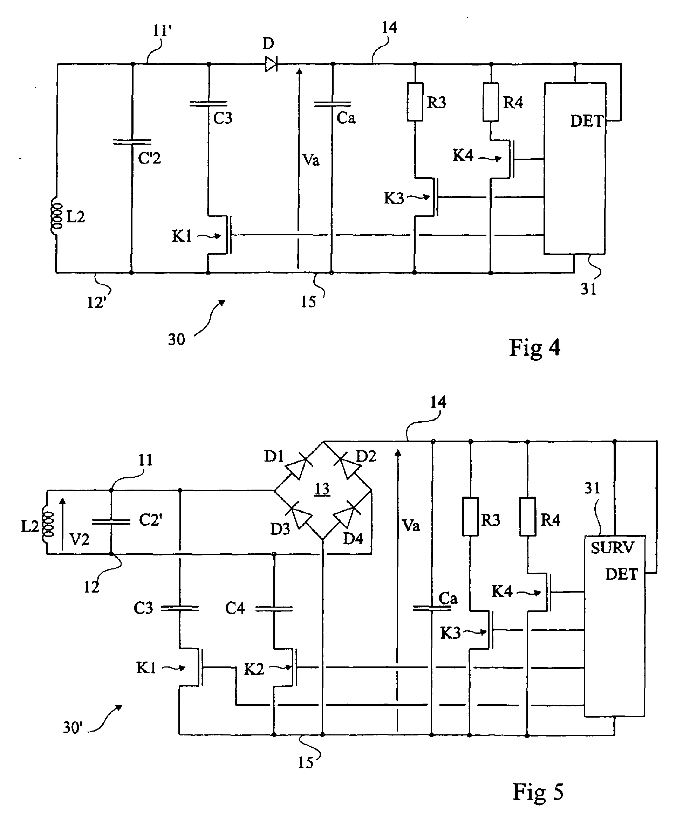

La figure 4 représente un premier mode de réalisation d'un transpondeur 30 selon l'invention mettant en oeuvre cette première solution. Comme précédemment, ce transpondeur est constitué à partir d'un circuit oscillant parallèle comprenant une inductance ou antenne L2 et un condensateur C2' entre deux bornes 11', 12' du circuit.

Dans le mode de réalisation illustré par la figure 4, le redressement opéré pour extraire une tension Va d'alimentation continue, lissée par un condensateur Ca, est un redressement monoalternance au moyen d'une diode D dont l'anode est reliée à la borne 11' et dont la cathode est connectée à la borne positive 14 du condensateur Ca. La référence de tension 15 correspond à la borne négative du condensateur Ca reliée directement à la borne 12'. La tension Va est destinée à un bloc électronique 31 comprenant, par exemple, les circuits 16 à 20 de la figure 1. Un condensateur C3 est monté en série avec un interrupteur (par exemple, un transistor MOS) K1 entre les bornes 11 et 12.

Selon un mode de réalisation préféré de l'invention, le circuit électronique est pourvu d'une entrée DET recevant la tension locale d'alimentation Va. Cette entrée DET est associée à un circuit (non représenté) de mesure de la tension Va et à au moins un élément de mémorisation de cette mesure. Dans un exemple de réalisation particulier, il pourra s'agir du microprocesseur (6, figure 1).

La mémorisation des valeurs des tensions mesurées s'effectue, soit de façon analogique, mais préférentiellement de façon numérique sur plusieurs bits dont le nombre dépend de la précision d'analyse souhaitée.

A titre de mode simplifié de réalisation, on pourra ne pas utiliser une entrée (DET) dédiée pour la détermination de distance, mais utiliser une entrée existante du microprocesseur (contenu dans le bloc 31) du transpondeur. Cette entrée classique surveille la tension locale d'alimentation disponible aux bornes du condensateur Ca par rapport à un seuil prédéterminé. Le microprocesseur mémorise (sous la forme d'un bit) l'état de cette tension par rapport à ce seuil. Ce bit sert classiquement, par exemple, à détecter si la tension récupérée par le circuit oscillant est suffisante pour l'alimentation du transpondeur, donc à activer ce dernier quand il entre dans le champ d'un lecteur. Cette fonction existe, par exemple, dans des microprocesseurs de transpondeur, par exemple, les circuits ST16 et ST19 de la société STMicroelectronics, et peut donc être utilisée sans modification importante du transpondeur.

Selon un mode de mise en oeuvre préféré de la présente invention, on effectue périodiquement, quand le transpondeur se trouve à portée d'une borne et, de préférence, dès que le transpondeur est activé (alimenté) par son entrée dans le champ d'un lecteur, le cycle de mesures suivant. Le transistor K1 est initialement fermé, le circuit oscillant étant accordé. On mémorise la tension présente sur la borne DET. Puis, on ouvre le transistor K1. Le circuit se trouve alors désaccordé, sa fréquence de résonance étant repoussée à, par exemple, plus du double de la fréquence d'accord si les condensateurs C2' et C3 ont la même valeur. On mémorise de nouveau la tension sur la borne DET. A titre de variante, la première mesure s'effectue circuit désaccordé. On compare entre elles les deux valeurs obtenues et on mémorise, par exemple sur un seul bit, le résultat de cette comparaison.

On notera que le temps nécessaire (par exemple, de l'ordre de quelques centaines de microsecondes) à l'exécution des deux mesures "accordé" et "désaccordé" est faible par rapport à la vitesse de déplacement du transpondeur qui correspond, dans la plupart des applications, à la vitesse de déplacement d'une main.

On notera également que la durée pendant laquelle on désaccorde le circuit oscillant pour effectuer une mesure est, de préférence, choisie pour être sensiblement différente de la demi-période de la sous-porteuse, afin que cette mesure ne soit pas interprétée par la borne comme une rétromodulation. En effet, le désaccord du circuit oscillant du transpondeur se traduit par un déphasage du signal dans le circuit oscillant L1C1 (figure 1) de la borne qui, lors de la détermination de distance, ne doit pas être pris pour une transmission de données.

Le cycle de mesures ci-dessus est répété après un bref intervalle de temps (par exemple, de l'ordre d'une milliseconde) qui reste rapide par rapport au temps de passage d'un transpondeur devant une borne (plusieurs centaines de millisecondes).

L'évolution de la valeur du bit de comparaison permet de savoir si le transpondeur se trouve plus près ou plus loin de la borne par rapport à la position de couplage critique.

Contrairement aux systèmes connus de mesure de distance (par exemple, du document WO-A-97/34250), l'invention tient compte du fait que l'énergie de téléalimentation récupérée côté transpondeur, n'est pas une fonction monotone de la distance qui sépare le transpondeur du lecteur.

En effet, quand les circuits oscillants sont accordés sur la fréquence de la porteuse de téléalimentation, si le transpondeur se rapproche d'une borne, l'amplitude de la téléalimentation commence par croître depuis la limite de portée du système (de l'ordre d'une dizaine de centimètres). Cette amplitude passe par un maximum (position de couplage critique) puis se met à diminuer de nouveau quand le transpondeur devient très proche (environ, moins de 2 centimètres).

Par contre, quand le circuit oscillant du transpondeur est désaccordé de la fréquence de la porteuse de téléalimentation, l'énergie reçue par le transpondeur augmente au fur et à mesure que la distance de la borne diminue, mais avec une portée réduite. Dans ce cas, il existe également une distance à laquelle l'énergie reçue est maximale pour une condition de désaccord donnée. On parle de couplage optimal, la position de couplage critique étant la position de couplage optimal quand les deux circuits oscillants sont accordés sur la fréquence de la porteuse. On notera que le coefficient de couplage optimal entre les deux circuits oscillants dépend non seulement des inductances L1 et L2, des condensateurs C1 et C2 et de la fréquence (qui est ici fixe et correspond à la fréquence de la porteuse), mais également de la résistance série R1 de la borne, et de la charge du circuit oscillant du transpondeur, c'est-à-dire de la résistance équivalente des circuits (microprocesseur, etc.) et du moyen de rétromodulation (par exemple, la résistance R3 ou R4 comme on le verra par la suite), ramenée en parallèle sur le condensateur C2 et l'inductance L2.

Ainsi, à partir de l'état du bit de comparaison, on peut, de façon simple, connaître la position du transpondeur par rapport au couplage critique sans mesurer la distance exacte. Si le bit indique un niveau plus élevé en position désaccordée qu'en position accordée, cela signifie que le transpondeur est très près de la borne (en couplage serré). Dans le cas contraire, le transpondeur est soit près du couplage critique, soit entre la position de couplage critique et la limite de portée du système.

Selon un autre mode de mise en oeuvre on mémorise les valeurs successives respectives des tensions afin d'étudier leur évolution. On peut alors affiner la mesure en déterminant le sens du mouvement éventuel du transpondeur. Si les niveaux d'énergie, respectivement accordé et désaccordé, évoluent dans le même sens entre deux mesures, cela signifie que le transpondeur est entre la position de couplage critique et la limite de portée du système. Selon le sens de cette variation, on peut déterminer si le transpondeur s'éloigne ou se rapproche de la borne, voire connaître la distance à partir d'une table de correspondance mémorisée dans le transpondeur.

Si les niveaux d'énergie, respectivement accordé et désaccordé, évoluent dans des sens opposés entre deux mesures, cela signifie que le transpondeur est entre la borne et la position de couplage critique. Si le niveau à l'accord augmente alors que le niveau désaccordé diminue, cela signifie que le transpondeur se rapproche de la position de couplage critique en s'éloignant de la borne. Si le niveau à l'accord diminue et que le niveau désaccordé augmente, cela signifie que le transpondeur se rapproche de la borne.

A titre de variante de mise en oeuvre, par exemple utilisant le bit classique de détection du niveau d'alimentation du microprocesseur, on peut comparer les niveaux de tension respectifs du circuit accordé et désaccordé par rapport à un seuil prédéterminé. Dans ce cas, on dispose alors quand même d'une information de la position du transpondeur par rapport au seuil de distance correspondant au couplage critique. Si le niveau désaccordé est en dessous du seuil et que le niveau accordé est supérieur au seuil, on est relativement loin de la borne (entre la position de couplage critique et la limite de portée). Si le niveau désaccordé est au-dessus du seuil et que le niveau accordé est en dessous du seuil, on est très près de la borne. Si les deux niveaux sont au-dessus du seuil, on est à proximité de la position de couplage critique. Si les deux niveaux sont en dessous du seuil, on est hors de la portée du système.

On notera que, dans un mode de mise en oeuvre simplifié, on peut se contenter de déterminer, avant chaque début de transmission de données du transpondeur vers la borne, la position du transpondeur par rapport au couplage critique.

Le désaccord du circuit oscillant peut s'effectuer dans les deux sens, soit en augmentant soit en diminuant sa fréquence de résonance par rapport à la fréquence de la porteuse de téléalimentation. Toutefois, on a constaté que les effets du désaccord ne sont pas symétriques. En particulier, les effets d'une modification de la capacité qui se traduisent par une variation du facteur de qualité sont, pour une valeur de modification donnée, plus prononcés pour une diminution que pour une augmentation de la capacité. Par ailleurs, plus on diminue la capacité, plus la position de couplage optimal est près de la borne. Plus on augmente la capacité, plus cette position de couplage optimal est loin de la borne. On notera que selon l'invention, il est préférable de provoquer un désaccord important du circuit oscillant par rapport à la fréquence de la porteuse de téléalimentation. Par conséquent, selon un mode de réalisation préféré de la présente invention, le désaccord s'effectue en diminuant la capacité du circuit oscillant du transpondeur, donc en décalant, vers les fréquences plus élevées, sa fréquence de résonance. Ainsi, l'interrupteur K1 est fermé pour un fonctionnement accordé.

La solution du premier mode de réalisation décrit en relation avec la figure 4 requiert, pour être viable en pratique, un redressement monoalternance.

En effet, dans un redressement double alternance, par exemple, au moyen d'un pont de diodes, cette solution pose d'importants problèmes en pratique en raison du besoin de commande de l'interrupteur à partir du circuit électronique alimenté par la tension redressée. En effet, on ne dispose alors pas, côté transpondeur, d'un potentiel de référence commun entre le circuit oscillant et la tension redressée de sorte qu'il n'est actuellement pas possible de commander un tel condensateur en parallèle sur l'antenne au moyen d'un simple transistor MOS commandé par le circuit électronique du transpondeur. En effet, ce circuit électronique est alimenté en aval du moyen de redressement alors que la capacité du circuit oscillant se trouve en amont de ce circuit de redressement. Ce problème est particulièrement sensible pour un redressement double alternance de la tension prélevée aux bornes du circuit oscillant du transpondeur, qui est préférable pour optimiser la téléalimentation.

Ainsi, la présente invention prévoit d'autres modes de réalisation d'un transpondeur dans lequel la modification de la capacité équivalente du circuit oscillant peut être effectuée par des moyens simples. En particulier, l'invention propose de permettre la commande, au moyen de simples transistors MOS, d'un moyen de modulation capacitif du circuit oscillant du transpondeur.

La figure 5 représente un deuxième mode de réalisation d'un transpondeur 30' selon l'invention. Selon ce mode de réalisation, les bornes 11, 12 du circuit oscillant sont reliées aux bornes d'entrée alternative d'un pont 13 constitué, par exemple, de diodes D1 à D4 comme en figure 1. Deux bornes de sortie redressée 14, 15 du pont 13 fournissent, par l'intermédiaire du condensateur de lissage Ca, la tension Va d'alimentation du bloc électronique 31.

Selon ce mode de réalisation, deux condensateurs C3 et C4 sont associés chacun en série avec un interrupteur (par exemple, un transistor MOS) K1, K2, respectivement entre les bornes 11 et 12 et la borne 15. Ainsi, une première borne du condensateur C3 est connectée à la borne 11, sa deuxième borne étant reliée, par l'intermédiaire du transistor K1, à la borne 15. Une première borne du condensateur C4 est connectée à la borne 12 tandis que son autre borne est connectée, par l'intermédiaire d'un transistor K2, à la borne 15. Les condensateurs C3 et C4 sont respectivement associées à chaque signe de la tension alternative haute fréquence V2 aux bornes de l'antenne L2. Les deux condensateurs C3 et C4 sont donc de mêmes valeurs. Les deux transistors K1 et K2 sont commandés par le bloc 31, de préférence, à partir d'un même signal, pour être fermés quand le circuit doit être accordé sur la fréquence de la porteuse de téléalimentation.

On notera que, grâce au dédoublement des condensateurs, on peut disposer d'un point de référence (ligne 15) pour la commande des interrupteurs K1 et K2. Ainsi, si les interrupteurs K1 et K2 sont constitués de transistors MOS à canal N, il est désormais possible, par un signal logique issu du bloc 31, de commander ces interrupteurs en tout ou rien, ce que ne permet pas la solution préconisée par le document WO-A-98/29760.

Par exemple, les condensateurs C2', C3 et C4 ont, chacun, une capacité correspondant à la moitié de la capacité (C2, figure 1) nécessaire pour accorder le circuit oscillant sur la fréquence de la porteuse du lecteur.

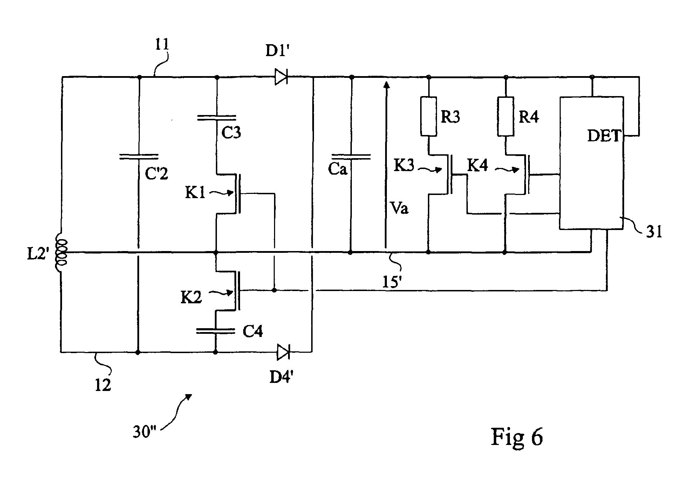

La figure 6 représente un troisième mode de réalisation d'un transpondeur 30" selon la présente invention. Ce transpondeur 30" reprend sensiblement les mêmes éléments que celui de la figure 5.

Une caractéristique de ce troisième mode de réalisation est de prévoir une inductance L2' à point milieu. Ce point milieu sert alors de référence 15 pour l'alimentation continue des circuits électroniques 31 du transpondeur. Ainsi, une première borne 11 de l'enroulement L2' est connectée à l'anode d'une diode de redressement D1' dont la cathode constitue la borne 14 d'alimentation locale positive du transpondeur. Une deuxième borne 12 de l'enroulement L2' est connectée à l'anode d'une deuxième diode de redressement D4' dont la cathode est connectée à la borne 14. Comme précédemment, un condensateur Ca est connecté entre la borne 14 et la ligne de référence 15 pour lisser la tension d'alimentation des circuits électroniques 31. Entre chacune des bornes 11, 12 et la ligne de référence 15 est connecté une capacité commutée selon l'invention constituée, par exemple comme en figure 5, d'un condensateur C3, C4 en série avec un interrupteur K1, K2.

On notera que les commandes des interrupteurs K1, K2 peuvent être réalisées à partir d'une même commande fournie par le bloc 31, comme l'illustre la figure 6, ou par des commandes distinctes (figure 5).

Dans les modes de réalisation des figures 5 et 6, les transistors K1 et K2 sont, de préférence, fermés quand le circuit oscillant doit être accordé. Si, en particulier dans le circuit de la figure 6, les condensateurs C3 et C4 ont, chacun, une valeur double de la valeur du condensateur C2', la fréquence de résonance se trouve, quand les interrupteurs K1 et K2 sont ouverts, repoussée approximativement au double de la fréquence de la porteuse.

La détection de la position du transpondeur par rapport à la distance correspondant au couplage critique constitue un mode de mise en oeuvre préféré de la présente invention en raison des avantages qu'elle procure pour une application à un fonctionnement en couplage serré. On notera cependant que l'invention peut également être mise en oeuvre pour détecter la position du transpondeur par rapport à un seuil de distance quelconque, qui est alors mémorisé dans le circuit électronique du transpondeur.

Dans une détermination de distance par rapport au couplage critique, la présente invention présente l'avantage que la détermination de distance ou la détection de zone (couplage serré ou couplage lâche) effectuée s'apparente à une mesure différentielle. En effet, la détection s'effectue par rapport au couplage critique qui dépend du système et de son environnement. Ce n'est qu'au couplage critique que le niveau de tension récupéré est maximal quand les circuits sont accordés. Il n'est donc pas nécessaire de prévoir une référence ou un seuil de distance particulier. En d'autres termes, ce seuil de distance entre les deux modes de fonctionnement accordé et désaccordé est alors auto-adaptatif.

Un exemple d'application de l'invention consiste à faire fonctionner le transpondeur soit accordé, soit désaccordé, selon la distance qui le sépare du lecteur. Un tel désaccord pour l'échange d'informations entre le transpondeur et la borne trouve un intérêt tout particulier lorsque le transpondeur est très proche du lecteur. Dans un tel cas, si les circuits oscillants sont accordés, l'énergie transmise de la borne vers le transpondeur est telle que ce dernier chauffe. Cet effet thermique est particulièrement gênant si le transpondeur est constitué d'une carte en matière plastique de type carte de crédit. En effet, dans un tel cas, l'effet thermique a pour conséquence une déformation de la carte lorsque celle-ci se trouve très proche de la borne.

La mise en oeuvre de l'invention permet, dans cette application, de commuter le fonctionnement du transpondeur vers un fonctionnement désaccordé si celui-ci est très près du lecteur. La conséquence d'un tel désaccord est que le fonctionnement se rapproche de celui d'un transformateur, c'est-à-dire que le facteur de qualité intervient moins. Or, dans le fonctionnement accordé classique, on recherche un facteur de qualité le plus élevé possible pour optimiser le transfert d'énergie lié à la téléalimentation du transpondeur. Dans un fonctionnement désaccordé, on peut diminuer la puissance de la borne, c'est-à-dire le courant dans l'antenne (L1, figure 1), tout en transmettant une énergie suffisante à la téléalimentation de la carte. En effet, comme le transpondeur est très proche de la borne, le problème de portée de la téléalimentation a disparu.

La diminution du courant nécessaire dans l'antenne de la borne supprime l'effet thermique côté transpondeur. La puissance nécessaire dépend alors essentiellement du rapport de transformation (rapport entre les nombres de spires) des inductances L1 et L2.

On notera également que, comme les circuits sont désaccordés, la bande passante est plus élevée. En effet, lorsque les circuits sont accordés, l'enveloppe du signal (Rx, figure 1) récupérée côté borne présente un temps d'établissement à chaque temps de transmission d'un bit. Ce temps d'établissement est précisément lié au fait que les circuits oscillants sont accordés. Un tel temps d'établissement est préjudiciable au débit de la transmission de données.

On notera que le désaccord des circuits oscillants pour la transmission des données n'est souhaitable qu'en couplage très proche. Par conséquent, la mise en oeuvre de l'invention permet de dissocier aisément les deux modes de fonctionnement du système selon que le transpondeur est ou non très proche du lecteur.

Un transpondeur 30 (figure 4), 30' (figure 5), ou 30" (figure 6) de l'invention comprend également un circuit de rétromodulation résistif constitué, de préférence, de deux résistances R3, R4, respectivement en série avec un interrupteur K3, K4 entre les bornes 14 et 15. Les résistances R3 et R4 ont des valeurs différentes, respectivement relativement forte et faible. Le rôle de ces résistances R3 et R4 sera mieux compris par la suite en relation avec un exemple d'application de la présente invention à un fonctionnement en couplage très proche du transpondeur avec un lecteur.

Si on est entre la position de couplage critique et la borne, on utilise la résistance R3 qui est de forte valeur pour effectuer la rétromodulation et on ouvre le transistor K1 (ou les transistors K1 et K2). On a alors un fonctionnement désaccordé du système qui sera proche d'un fonctionnement en transformateur.

Si on est loin de la position de couplage critique en étant plus loin de la borne que cette position, cela revient à dire que le couplage est lâche. On ferme alors le transistor K1 (ou les transistors K1 et K2), et on effectue la rétromodulation résistive au moyen de la résistance R4 qui est de plus faible valeur. On est alors dans un mode de fonctionnement classique.

On notera que l'invention, en utilisant une résistance de faible valeur quand on est loin de la borne, optimise la portée du système. Le rapport entre les valeurs respectives des résistances R3 et R4 est, par exemple, compris entre 4 et 10 (R3 comprise entre 0,4 et 5 kiloohms et R4 comprise entre 100 et 500 ohms) et, de préférence, de l'ordre de 6 (par exemple, environ 1500 et 250 ohms).

A titre de variante, on pourra laisser en permanence (par la fermeture de l'interrupteur K4) la résistance de forte valeur (R4) dans le circuit quand on est en fonctionnement commuté de la résistance R3. Dans ce cas, la charge statique diminue, ce qui diminue le facteur de qualité et améliore le débit maximal possible. On notera que cette amélioration pourra être obtenue par d'autres moyens (par exemple, une troisième résistance commutée).

On notera également que l'invention ne nécessite pas de transmission d'information (de modulation) du lecteur vers le transpondeur ou du transpondeur vers le lecteur pour la détermination de distance. Le transpondeur de l'invention détecte donc sa position sans aucune intervention du lecteur. Le transpondeur peut alors, par exemple, émettre en rétromodulation un message différent selon sa position, la nature de ce message plaçant le système dans un mode de fonctionnement ou un autre.

On notera en outre que la détermination de distance est, de préférence, mise en oeuvre périodiquement en cours de communication. Cela permet, par exemple, de vérifier que le transpondeur ne change pas de zone de fonctionnement en cours de communication, ou de détecter ce changement si le système prévoit des modes de communication différents tout en les autorisant dans une même communication.

A titre de variante, on pourra supprimer le condensateur C2' et utiliser un condensateur C3 (figure 4) ou deux condensateurs C3 et C4 (figures 5 et 6) ayant, chacun, une capacité correspondant à la valeur nécessaire à l'accord. Dans ce cas, les capacités parasites du circuit jouent le rôle de capacités complémentaires du circuit oscillant quand l'interrupteur K1 (figure 4) ou les interrupteurs K1 et K2 (figures 5 et 6) sont ouverts.

Selon une autre variante, le ou les condensateurs servant à désaccorder le circuit servent également de moyen de rétromodulation. Dans ce cas, les résistances commutées R3, K3 et R4, K4 sont supprimées et les valeurs des condensateurs C2', C3 (et C4 pour les modes de réalisation des figures 5 et 6) sont choisies pour que l'importance du désaccord soit compatible avec le déphasage à détecter par la borne dans le cas d'une modulation capacitive. La modulation capacitive influence directement la phase de la tension aux bornes de l'inductance L1 de la borne sans intervenir sur son amplitude. Cela facilite la détection de phase par la borne. On notera que le type de rétromodulation ne modifie pas le codage, c'est-à-dire le signal de commande de l'interrupteur ou des interrupteurs de rétromodulation à la fréquence de la sous-porteuse.

Bien entendu, la présente invention est susceptible de diverses variantes et modifications qui apparaîtront à l'homme de l'art. En particulier, les dimensionnements respectifs des différents condensateurs et résistances sont à la portée de l'homme du métier en fonction de l'application et, notamment, des fréquences utilisées et de la portée du système. Dans le dimensionnement des condensateurs du circuit oscillant, on tiendra compte du moyen de redressement utilisé et de la valeur du condensateur de lissage Ca. En effet, les périodes de conductions des diodes d'un pont (figure 5) sont généralement plus faibles devant la période de la porteuse de téléalimentation que les périodes de conduction d'une diode de redressement monoalternance (figure 4). Par conséquent, le rapport cyclique d'action des moyens de rétromodulation est différent selon le type de redressement effectué. Or, ce rapport cyclique influe, côté borne, sur la valeur du déphasage qui doit être détecté.

De plus, bien que l'invention ait été décrite en relation avec une application permettant deux modes de fonctionnement respectivement accordé et désaccordé du système, on notera que l'invention peut également servir à détecter la position du transpondeur par rapport à la position de couplage critique (voire à une autre position de distance) pour, par exemple, n'autoriser qu'un seul des deux modes de fonctionnement décrits en relation avec l'application particulière ci-dessus.

Parmi les applications de la présente invention, on signalera plus particulièrement les cartes à puces sans contact (par exemple, les cartes d'identification pour contrôle d'accès, les cartes porte-monnaie électronique, les cartes de stockage d'information sur le possesseur de la carte, les cartes de fidélité de consommateurs, les cartes de télévisions à péage, etc.), et les systèmes de lecture ou de lecture/écriture de ces cartes (par exemple, les bornes ou portiques de contrôle d'accès, les distributeurs automatiques de produits, les terminaux d'ordinateurs, les terminaux téléphoniques, les téléviseurs ou décodeurs satellite, etc.).

## Revendications

1. Procédé de détermination de la distance séparant un transpondeur électromagnétique (30 ; 30' ;30") d'une borne (1) produisant un champ magnétique au moyen d'un premier circuit oscillant (L1, C1), le transpondeur comprenant un deuxième circuit oscillant (L2, C2), en amont d'un moyen de redressement (D ; 13 ; D1', D4') propre à fournir une tension continue, **caractérisé en ce qu'**il consiste à :
mémoriser une première information relative au niveau de ladite tension continue quand le deuxième circuit oscillant est accordé sur une fréquence déterminée ;
mémoriser une deuxième information relative au niveau de ladite tension continue après avoir provoqué un désaccord en fréquence du deuxième circuit oscillant ; et
comparer les deux informations mémorisées.

2. Procédé selon la revendication 1, **caractérisé en ce qu'**il consiste à effectuer périodiquement lesdites mesures et à comparer l'évolution des informations mémorisées pour deux mesures successives dans les mêmes conditions d'accord.

3. Procédé selon la revendication 1 ou 2, **caractérisé en ce que** lesdites information représentent les valeurs respectives de la tension continue.

4. Procédé selon l'une quelconque des revendications 1 à 3, **caractérisé en ce que** ladite comparaison entre les première et deuxième informations sert à déterminer la position du transpondeur (30) par rapport à une position de couplage critique des circuits oscillants respectifs du transpondeur et de la borne (1) .

5. Procédé selon l'une quelconque des revendications 1 à 4, **caractérisé en ce que** ladite fréquence déterminée correspond à la fréquence d'excitation du circuit oscillant de la borne (1) pour la téléalimentation du transpondeur (30).

6. Procédé selon l'une quelconque des revendications 1 à 5, **caractérisé en ce qu'**il est appliqué à déterminer le mode de fonctionnement du transpondeur parmi deux modes correspondant respectivement à une position en couplage serré ou en couplage lâche.

7. Transpondeur électromagnétique propre à mettre en oeuvre le procédé selon l'une quelconque des revendications 1 à 6, **caractérisé en ce qu'**il comporte au moins une capacité commutée (C3 ; C3, C4).

8. Transpondeur selon la revendication 7, **caractérisé en ce qu'**il comporte un condensateur (C3), en parallèle avec un élément inductif (L2) du deuxième circuit oscillant, et en série avec un moyen de commutation (K1), ledit moyen de redressement étant constitué d'un élément à conduction unidirectionnelle (D).

9. Transpondeur selon la revendication 7, **caractérisé en ce qu'**il comporte deux condensateurs (C3, C4), respectivement associés à chaque borne (11, 12) d'extrémité d'un élément inductif (L2 ; L2') du deuxième circuit oscillant, chaque condensateur étant associé en série à un moyen de commutation (K1, K2) dont une borne de référence est connectée à un potentiel de référence (15) d'alimentation du circuit électronique, en aval du moyen de redressement (13 ; D1', D4').

10. Transpondeur selon la revendication 9, **caractérisé en ce qu'**il comporte en outre deux moyens résistifs de modulation (R3, K3 ; R4, K4), en parallèle sur un condensateur (Ca) de lissage de la tension redressée délivrée par ledit moyen de redressement (D ; 13 ; D1', D2').

## Claims

1. A method of determining the distance separating an electromagnetic transponder (30; 30'; 30") from a terminal (1) generating a magnetic field by means of a first oscillating circuit (L1, C1), the transponder including a second oscillating circuit (L2, C2), upstream of a rectifying means (D; 13; D1', D4') adapted to provide a D.C. voltage, **characterized in that** it comprises:
storing a first information relative to the level of the D.C. voltage when the second oscillating circuit is tuned on a determined frequency;
storing a second information relative to the level of the D.C. voltage after having caused a frequency detuning of the second oscillating circuit; and
comparing the first and second information.

2. The method of claim 1, **characterized in that** it includes the steps of periodically measuring said levels and comparing the variation of the stored information for two successive measurements in the same tuning conditions.

3. The method of claim 1 or 2, **characterized in that** said first and second information represent the respective values of the D.C. voltage.

4. The method of any of claims 1 to 3, **characterized in that** the comparison between the first and second information is used to determine the position of the transponder (30) with respect to a critical coupling position of the respective oscillating circuits of the transponder and of the terminal (1).

5. The method of any of claims 1 to 4, **characterized in that** said determined frequency corresponds to the excitation frequency of the oscillating circuit of the terminal (1) for the remote supply of the transponder (30).

6. The method of any of claims 1 to 5, **characterized in that** it is applied to determining the operating mode of the transponder among two modes respectively corresponding to a tight coupling or loose coupling position.

7. An electromagnetic transponder adapted to implementing the method of any of claims 1 to 6, **characterized in that** it includes at least one switched capacitor (C3; C3, C4).

8. The transponder of claim 7, **characterized in that** it includes a capacitor (C3), in parallel with an inductive element (L2) of the second oscillating circuit, and in series with a switching means (K1), the rectifying means being formed of a one-way conduction element (D).

9. The transponder of claim 7, **characterized in that** it includes two capacitors (C3, C4), respectively associated with each end terminal (11, 12) of an inductive element (L2; L2') of the second oscillating circuit, each capacitor being connected in series with a switching means (K1, K2), a reference terminal of which is connected to a reference supply potential (15) of the electronic circuit, downstream of the rectifying means (13; D1', D4').

10. The transponder of claim 9, **characterized in that** it further includes two resistive modulation means (R3, K3; R4, K4), in parallel with a capacitor (Ca) for smoothing the rectified voltage provided by the rectifying means (D; 13; D1', D2').

## Patentansprüche

1. Verfahren zur Bestimmung der Entfernung, welche einen elektromagnetischen Transponder (30; 30'; 30'') von einem Terminal (1) trennt, das mittels eines ersten Schwingkreises (L1, C1) ein Magnetfeld erzeugt, wobei der Transponder einen zweiten Schwingkreis (L2, C2) stromaufwärts eines Gleichrichtmittels (D; 13; D1; D4) zur Bildung einer Gleichspannung aufweist, **dadurch gekennzeichnet, dass** das Verfahren besteht in:
Speichern einer ersten Information betreffend den Betrag bzw Pegel der genannten Gleichspannung, wenn der zweite Schwingkreis auf eine bestimmte Frequenz abgestimmt ist;
Speichern einer zweiten Information betreffend den Betrag bzw Pegel der genannten Gleichspannung nach Herbeiführung einer Frequenzverstimmung des zweiten Schwingkreises; sowie
Vergleichen der beiden gespeicherten Informationen

2. Verfahren nach Anspruch 1, **dadurch gekennzeichnet, daß** das Verfahren die periodische Vornahme der genannten Messungen und den Vergleich des Verlaufs der für zwei aufeinanderfolgende Messungen unter denselben Abstimmbedingungen gespeicherten Informationen umfasst.

3. Verfahren nach Anspruch 1 oder 2, **dadurch gekennzeichnet, dass** die genannten Informationen die jeweiligen Beträge der Gleichspannung darstellen.

4. Verfahren nach einem der Ansprüche 1 bis 3, **dadurch gekennzeichnet, dass** der genannte Vergleich zwischen den ersten und zweiten Informationen zur Bestimmung der Lage bzw Stellung des Transponders (30) relativ bezuglich einer kritischen Kopplungsstellung bzw -lage der jeweiligen Schwingkreise des Transponders und des Terminals (1) dient.

5. Verfahren nach einem der Anspruche 1 bis 4, **dadurch gekennzeichnet dass** die genannte bestimmte Frequenz der Anregungsfrequenz des Schwingkreises des Terminals für die Fernspeisung bzw-Stromversorgung des Transponders (30) entspricht.

6. Verfahren nach einem der Ansprüche 1 bis 5, **dadurch gekennzeichnet, daß** das Verfahren zur Bestimmung der Betriebsweise des Transponders zwischen zwei Modes entsprechend einer Stellung enger oder loser Kopplung angewendet wird

7. Elektromagnetischer Transponder zur Ausübung des Verfahrens nach einem der Ansprüche 1 bis 6, **dadurch** gekennzeicnet, dass der Transponder wenigstens eine geschaltete Kapazität (C3; C3, C4) aufweist

8. Transponder nach Anspruch 7, **dadurch** gekennzeicnet, dass er einen Kondensator (C3) in Parallelanordnung mit einem induktiven Element (L2) des zweiten Scwingkreises und in Reihe mit einem Schaltermittel (K1) aufweist und dass das genannte Gleichrichtmittel von einem Element (D) mit unidirektionaler Leitfähigkeit gebildet wird

9. Transponder nach Anspruch 7, **dadurch gekennzeichnet, daß** er zwei Kondensatoren (C3,C4) jeweils in Zuordnung zu jedem Anschlußende (11, 12) eines induktiven Elements (L2; L2) des zweiten Schwingkreises aufweist und dass jeder Kondensator jeweils in Reihe einem Schaltermittel (K1, K2) zugeordnet ist, von dem ein Bezugsanschluß mit einem Bezugspotential (15) der Stromversorgung der elektronischen Schaltung stromabwärts des Gleichrichtmittels (13; D1', D4') verbunden ist

10. Transponder nach Anspruch 9, **dadurch gekennzeichnet, dass** er des weiteren zwei Modulations-Widerstandsmittel (R3, K3; R4, K4) in Parallelanordnung über einem Glättungskondensator (Ca) für die durch das genannte Gleichrichtmittel (D; 13; D1', D2') gelieferte Gleichrichtspannung aufweist.
